# EUROPÄISCHE PATENTSCHRIFT

(11) **EP 1 245 460 B1**
(45) Veröffentlichungstag und Bekanntmachung des Hinweises auf die Patenterteilung: **31.08.2005**
(21) Anmeldenummer: 02002822.1
(22) Anmeldetag: 08.02.2002
(51) Int. Cl.: B60R 21/13

(54) **Überrollschutzsystem für Kraftfahrzeuge mit einem pyrotechnischen Aktuator**
Rollover protection system for vehicles with a pyrotechnical actuator
Système de protection de tonneau pour véhicules à moteur avec actuateur pyrotechnique

(30) Priorität: 29.03.2001 DE 10115392
(43) Veröffentlichungstag der Anmeldung: 02.10.2002
(73) Patentinhaber: ISE Innomotive Systems Europe GmbH, 51702 Bergneustadt (DE)
(72) Erfinder: Janisch, Mirko, 53797 Lohmar (DE); Berges, Stephan, 51647 Gummersbach (DE); Nowack, Reinhard, 57489 Drolshagen (DE)
(74) Vertreter: Fuchs Mehler Weiss & Fritzsche

(56) Entgegenhaltungen:
- EP-A- 0 657 326
- DE-C- 10 027 753
- DE-C- 10 103 245

## Beschreibung

Die Erfindung bezieht sich auf ein Überrollschutzsystem für Kraftfahrzeuge, mit einem Überrollkörper, der in einer fahrzeugfesten Führungseinheit geführt aufgenommen ist, und der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung mit einem einen Stift ausstoßenden pyrotechnischen Auslöseglied durch die Federkraft der Antriebs-Druckfeder in eine obere, dort verriegelbare Stellung bringbar ist.

Derartige Überrollschutzsysteme dienen zum Schutz der Insassen in Kraftfahrzeugen ohne schützendes Dach, typischerweise in Cabriolets oder Sportwagen.

Es ist dabei bekannt, einen die gesamte Fahrzeugbreite überspannenden, fest installierten Überrollbügel vorzusehen oder jedem Fahrzeugsitz einen höhenunveränderlich fest installierten Überrollbügel zuzuordnen.

Bei beiden Lösungen wird der erhöhte Luftwiderstand und das Auftreten von Fahrgeräuschen als nachteilig empfunden, abgesehen von der Beeinträchtigung des Fahrzeugaussehens.

Am Markt setzen sich daher immer mehr konstruktive Lösungen durch, bei denen der Überrollbügel im Normalzustand eingefahren ist, und im Gefahrenfall, also bei einem drohenden Überschlag, schnell in eine schützende Position ausgefahren wird, um zu verhindern, daß die Fahrzeuginsassen durch das sich überschlagende Fahrzeug erdrückt werden.

Diese Lösungen weisen typischerweise gemäß der DE 43 42 400 A1 einen in einem fahrzeugfesten Kassetten-Gehäuse geführten U-förmigen oder aus einem Profilkörper gebildeten Überrollbügel, auf, der im Normalzustand gegen die Vorspannkraft einer Antriebs-Druckfeder durch eine Haltevorrichtung in einer unteren Ruhelage gehalten wird, und im Überschlagfall sensorgesteuert unter Lösen der Haltevorrichtung, durch die Federkraft in eine obere, schützende Stellung bringbar ist, wobei eine dann in Wirkeingriff tretende Verriegelungseinrichtung ein Eindrücken des Überrollbügels in die Kassette verhindert.

Die Haltevorrichtung besitzt dabei typischerweise ein am Überrollkörper befestigtes Halteglied, das in lösbarer mechanischer Wirkverbindung mit einem Auslöseglied an einem sensorgesteuerten fahrzeugfesten Auslösesystem steht, das typischerweise durch einen Auslösemagneten, den sogenannten Crashmagneten, oder durch ein pyrotechnisches Auslöseglied, gebildet ist.

Haltevorrichtungen der vorgenannten Art sind in zahlreichen Konstruktionsvarianten bekannt geworden. So zeigt die DE 43 14 538 C1 eine sogenannte, mit dem Überrollbügel mechanisch beweglich verbundene Haltewippe als Halteglied, die einen Haltebolzen besitzt, der in Wirkverbindung mit einem hakenförmigen Auslöseglied steht, das durch Aktivieren des Auslösemagneten in eine den Haltebolzen freigebende Stellung bewegbar ist.

Weitere Konstruktionen von Haltevorrichtung mit Auslösemagneten zeigen die DE 43 42 400 A1, EP 0 760 314 A1, DE 197 50 457 A1 und DE 37 32 562 C2.

Die Auslösung des Überrollbügels im Crashfall unter Verwendung eines pyrotechnischen Zündsatzes wird erstmals in der gattungsbildenden DE 43 42 401 A1 (EP-A-657 326) beschrieben.

Diese Haltevorrichtungen sind eine wesentliche, die Funktionsfähigkeit des Überrollschutzsystems maßgebend beeinflussende System-Komponente.

Bei ihrer konstruktiven Auslegung wird daher zunächst auf eine sichere Auslösbarkeit geachtet. Es kommt jedoch ein weiteres hinzu. Nach einer Auslösung des Systems zu Testzwecken bei der Fertigung und später bei Inspektionen oder nach einer ungewollten Auslösung soll beim Zurückbringen des Überrollkörpers in die Ruhelage, sei es manuell oder mittels eines Komfortantriebes, das Halteglied wieder selbstätig in die haltende Ausgangsstellung, die Haltestellung, bringbar sein. Diesen Vorgang nennt man auch Reversieren. Bei Auslösegliedern von Haltevorrichtungen mit Auslösemagneten ist dieses Reversieren konstruktiv ohne weiteres möglich, in Verbindung mit Einlaufschrägen und einem federnd nachgiebig angebrachten Halteglied, das auch bei Fluchtungsfehlern selbstätig in das Auslöseglied, z.B. ein bekanntes Doppelhebelsystem eines Auslösemagneten, einrastet.

Bei Haltevorrichtungen mit pyrotechnischen Auslösegliedern, von denen die Erfindung ausgeht, ist eine besondere Problematik gegeben. Pyrotechnische Auslöseglieder bestehen typischerweise aus einer Patrone mit einem Zündsatzteil, der den Treibsatz enthält, und einem mechanischen Wirkteil, der einen bei Zündung ausstoßbaren, an einem Kolben angeformten Stift enthält, der eine federvorgespannte, hakenförmige Halteklinke (das Halteglied am Überrollbügel), die in einer fahrzeugfesten Verankerung lösbar aufgenommen ist, wegstößt und aus der Verankerung freigibt. Die Stirnseite des Stiftes steht dabei nach der Auslösung im wesentlichen im Bereich der Verankerung und versperrt daher räumlich ein Wiedereinhaken des Haltegliedes. Ein selbsttätiges Zurückschieben des Stiftes ist dabei nicht möglich, denn, um einen kontrollierten Ausstoß des Stiftes zu gewährleisten, erfolgt im Wirkteil ein Kraftabbau über eine Materialverformung in dem Stift umgebenden Gehäuse, wodurch eine hohe Klemmkraft entsteht. Die Reversierung des Stiftes mit dem Betätigungskolben ist daher bei herkömmlichen pyrotechnischen Patronen nur mit erheblichen Kräften in der Größenordnung von 150 N möglich, so daß die federvorgespannte Halteklinke nach der Auslösung keine Möglichkeit hat, mit eigener Kraft in die Verankerung durch Eindrücken des Stiftes mit dem Kolben wieder einrasten zu können.

Der Erfindung liegt die Aufgabe zugrunde, das eingangs bezeichnete Überrollschutzsystem für Kraftfahrzeuge so auszubilden, daß auch bei Haltevorrichtungen mit einem pyrotechnischen Auslöseglied mit einfachen Mitteln ein Reversieren des Überrollkörpers möglich ist.

Die Lösung dieser Aufgabe gelingt bei einem Überrollschutzsystem für Kraftfahrzeuge, mit einem Überrollkörper, der in einer fahrzeugfesten Führungseinheit geführt aufgenommen ist, und der im Normalzustand gegen die Kraft von mindestens einer vorgespannten Antriebs-Druckfeder durch eine Haltevorrichtung in einer unteren, eingefahrenen Ruhelage haltbar ist und unter Lösen der Haltevorrichtung mit einem einen Stift ausstoßenden pyrotechnischen Auslöseglied durch die Federkraft der Antriebs-Druckfeder in eine obere, dort verriegelbare schützende Stellung bringbar ist gemäß der Erfindung dadurch, daß die Haltevorrichtung eine mit dem Überrollkörper drehbeweglich verbundene, federvorgespannte Halteklinke und einen fahrzeugfest angebrachten Haltebolzen aufweist, die in der Ruhelage haltend miteinander in Wirkverbindung stehen, und daß zwischen der Stirnfläche des Stiftes des pyrotechnischen Auslösegliedes und der Halteklinke ein federvorgespanntes, um den Haltebolzen verschwenkbares Distanzstück angeordnet ist.

Durch die Wirkung des Distanzstückes, das unmittelbar im Auslösefall die Halteklinke aus dem Wirkeingriff mit dem Haltebolzen wegdrückt und die selbsttätige Verschwenkung des Distanzstückes aufgrund der Federvorspannung, wird erreicht, daß der ausgelöste Stift des pyrotechnischen Auslösegliedes im ausreichenden Abstand vor dem Haltebolzen zum Stehen kommt, und der Raum unterhalb des Haltebolzens für ein selbsttätiges Wiedereinrasten der federvorgespannten Halteklinke beim Reversieren mit großen Vorteil frei bleibt.

Eine besonders einfache konstruktive Gestaltung des Auslösesystems läßt sich gemäß einer Weiterbildung der Erfindung erzielen, wenn das Distanzstück durch einen über Wangen abgekröpften Verbindungssteg einer Wippe gebildet ist, die zwei Lagerbuchsen für die Lagerung der Wippe auf dem Haltebolzen aufweist, wobei die Lagerbuchsen jeweils eine Vorspannfeder tragen, die über einen die Wangen umfassenden Verbindungsbügel miteinander verbunden sind, derart, daß nach einer Auslösung der Verbindungssteg aus dem Raum unterhalb des Haltebolzens nach oben um den Haltebolzen verschwenkbar ist.

Die fahrzeugfeste Anbringung des Auslösegliedes und des Haltebolzens läßt sich mit Vorteil auf einfache, sichere und servicefreundliche Weise so gestalten, daß eine fahrzeugfest anbringbare Halterung vorgesehen ist, mit einem Halterungsteil für das auswechselbare Haltern des als Patrone ausgebildeten pyrotechnischen Auslösegliedes und einem Halterungsteil mit Lagerböcken für das fixierte Lagern des Haltebolzens.

Eine besonders einfache Auswechselbarkeit des pyrotechnischen Auslösegliedes ist dabei gegeben, wenn das Halterungsteil für das pyrotechnische Auslöseglied als offener Klemmhalter ausgebildet ist.

Um die die Wippe vorspannende Feder sicher zu haltern, sieht eine Ausgestaltung der Erfindung vor, daß die Lagerböcke Hinterschneidungen für das Fixieren der Enden der Vorspannfeder aufweisen.

Um die nach einer Auslösung nach oben verschwenkte Wippe auf einfache Weise in die Ausgangslage zurückbringen zu können, sieht eine weitere Ausgestaltung vor, daß an der Wippe ein Betätigungsstift für ein manuelles Zurückverschwenken der ausgelösten Wippe angebracht ist.

Da der Haltebolzen ein sicherheitskritisches Teil der Haltevorrichtung ist, ist gemäß einer anderen Ausgestaltung der Haltebolzen unter Verwendung von Sicherungsscheiben in den Lagerböcken fixiert gelagert.

Um ein wirksames Festhalten des Überrollbügels einerseits und eine sichere Auslösung andererseits zu gewährleisten, hat sich eine Haltevorrichtung als zweckmäßig erwiesen, bei der die Halteklinke einen hakenförmig abgewinkelten Fortsatz für den haltenden Wirkeingriff mit dem Haltebolzen aufweist.

Die erfindungsgemäße Haltevorrichtung kann bei unterschiedlichen Überrollschutzsystemen Anwendung finden. Besondere konstruktive Vorteile werden erreicht bei einem Überrollschutzsystem mit einem fahrzeugfesten kassettenartigen Gehäuse mit Seitenteilen, einem Bodenteil und einer oberen Führungseinheit, und einen U-förmigen Überrollbügel, der zwei Schenkelrohre besitzt, deren freie Enden über eine Traverse miteinander verbunden sind, indem die federvorgespannte Halteklinke drehbeweglich an der Traverse angelenkt ist, und sowohl der Haltebolzen mit dem um ihn schwenkbaren Distanzstück als auch das pyrotechnische Auslöseglied auf dem Kassetten-Bodenteil fest angebracht sind.

Weitere ausgestaltende Merkmale der Erfindung ergeben sich anhand der Beschreibung eines in den Zeichnungen in verschiedenen Ansichten und Ausschnitten dargestellten Ausführungsbeispieles der Erfindung.

Es zeigen:
- Figur 1: eine perspektivische Darstellung eines Überrollschutzsystem in Kassettenbauweise, bei dem die erfindungsgemäße pyrotechnische Haltevorrichtung mit einem Distanzstück im Auslöseweg des pyrotechnischen Auslösesystem in Form einer verschwenkbaren Wippe integriert ist,
- Fig. 2: eine perspektivische Darstellung des Bodenteils der Kassette nach Figur 1 mit daran angebrachtem pyrotechnischen Auslösesystem entsprechend den Figuren 3 bis 5,
- Figur 3: in einer perspektivischen Darstellung einen vergrößerten Ausschnitt aus Figur 2, der das pyrotechnische, stiftausstoßende Auslösesystem mit der Wippe und einem Haltebolzen für die lösbare Halterung des Überrollkörpers näher zeigt,
- Figur 4: eine Darstellung entsprechend Figur 2, jedoch ohne den pyrotechnischen Aktuator, gesehen von der anderen Seite der Haltevorrichtung unter Darstellung der Aktuatorhalterung und der Lagerung der Wippe,
- Figur 5: in zwei perspektivischen Ansichten A, B die erfindungsgemäße Wippe in zwei verschiedenen Montagezuständen, und
- Figur 6: in vier Figurenteilen A - D jeweils in einer schematisierten Längsschnitt-Darstellung des erfindungsgemäßen pyrotechnischen Auslösesystems vier verschiedene Zustände des Systems beim Auslösen und Reversieren des Überrollbügels.

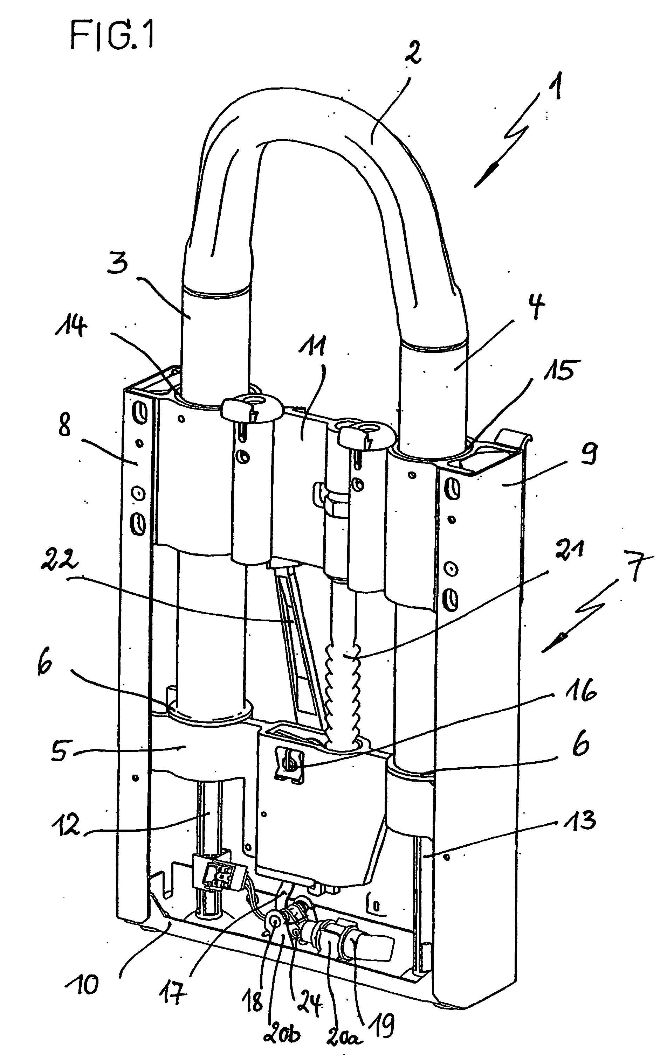

Die Figur 1 zeigt in einer perspektivischen Darstellung eine Kassettenkonstruktion eines Überrollschutzsystems für Kraftfahrzeuge, das jeweils einem Fahrzeugsitz zugeordnet ist, bei dem die erfindungsgemäße Haltevorrichtung vorgesehen ist. Es versteht sich, daß die erfindungsgemäße Haltevorrichtung auch bei anderen Überrollschutzsystemen Anwendung finden kann.

In Figur 1 ist dabei der eingefahrene Zustand des Systems, d.h. die betriebliche Ruhelage dargestellt. In der folgenden Beschreibung der Figur 1 werden dabei der besseren Übersicht halber nur die wesentlichen Komponenten des Überrollschutzsystems angesprochen.

Dieses Überrollschutzsystem weist zunächst einen U-förmigen Überrollbügel 1 auf, welcher aus drei Rohren 2, 3, 4 zusammengesetzt ist. Dabei bildet den Basisschenkel des Überrollbügels 1 im wesentlichen ein gekrümmtes Rohr 2, welches an seinen Enden mit zwei Schenkelrohren 3, 4 durch Schweißen oder andere geeignete Verbindungsarten starr verbunden ist.

Außer zylindrischen Querschnitten für die Bügel-Schenkelrohre können aus Stabilitätsgründen auch ovale oder eckige Querschnitte gewählt werden.

Prinzipiell sind auch andere Formen eines Überrollkörpers einsetzbar, beispielsweise ein Überrollkörper, der aus einem einstückigen Profilkörper gebildet ist.

Die offenen Enden der Schenkelrohre 3, 4 sind mittels einer Traverse 5 miteinander starr verbunden. Zu diesem Zweck ist die Traverse 5 als Profilkörper mit vorgegebener Höhe ausgebildet, der Bohrungen 6 zur Aufnahme der Schenkelrohre 3, 4 aufweist, in denen sie befestigt sind.

Der Überrollbügel 1 ist mit seinen beiden Schenkelrohren 3, 4, die eine geschlossene Mantelfläche aufweisen und der Verbindungs-Traverse 5, in einem kassettenartigen Gehäuse 7 aufgenommen und aus- bzw. einfahrbar darin gehaltert. Dieses Gehäuse weist zwei Seitenteile 8, 9 auf, die durch einen U-förmigen Profilkörper gebildet werden, die vorzugsweise aus Metall, insbesondere aus Stahl, bestehen. Diese Seitenprofile 8, 9 sind unten über ein Bodenblechteil 10 und oben über einen fahrzeugfesten Führungsblock 11 miteinander verbunden, z.B. durch Nieten, Schrauben, Verschweißen oder dergleichen.

Im Bodenblech 10 sind zwei Federführungsbolzen 12, 13 verankert, auf denen (nicht dargestellte) vorspannbare Druckfedern zum Ausfahren des Überrollbügels 1 im Gefahrenfall, bzw. bei Handauslösung, aufgeschoben sind und die die Schenkelrohre führen.

An den Federführungsbolzen 12, 13 ist dabei jeweils mindestens ein Satz (nicht dargestellt) gespreizter Zentrierarme angebracht, vorzugsweise einstückig angeformt, die einen gleichmäßigen Abstand zwischen der zugehörigen Druckfeder und dem zugeordneten Schenkelrohr 3, 4 sichern, was sich mit Vorteil auch geräuschmindernd auswirkt.

Es ist auch denkbar, die Federführungsbolzen 12, 13 mit ebenfalls im Bodenteil 10 verankerten Standrohren mit geschlossenen Mantelflächen zu umgeben, über die die Schenkelrohre, die Standrohre übergreifend, geführt sind.

Die beiden Seitenprofile 8, 9 sind zweckmäßig, zumindest auf einer Frontseite der Kassette, mit einem Deckblech verbunden, das sich zweckmäßig, aber nicht notwendigerweise, über die gesamte Kassettenhöhe erstreckt (nicht dargestellt).

Der Führungsblock 11 besitzt zwei Führungsbohrungen 14, 15, die die Mantelfläche der Schenkelrohre 3, 4 seitlich abstützen und eine sehr weit tolerierte Führung für die sich längs der Führungsbohrungen 14, 15 bewegenden Schenkelrohre 3, 4 bieten. Am oberen, dem gekrümmten Rohr 2 zugewandten Ende der Führungsbohrungen 14, 15 ist zweckmäßig eine radiale Ansenkung oder Ringnut angelegt, welche in bekannter Weise eine ringförmige, radial elastische Führungsbuchse aufnimmt (nicht dargestellt), wodurch das radiale Spiel der Bügel-Schenkelrohre 3, 4 in den Führungsbohrungen 14, 15 ausgeglichen wird. Zusätzlich ist für die Schenkelrohre noch eine innere Führung vorgesehen, die durch die erwähnten gehäusefesten Federführungsbolzen bzw. Standrohre gewährleistet ist.

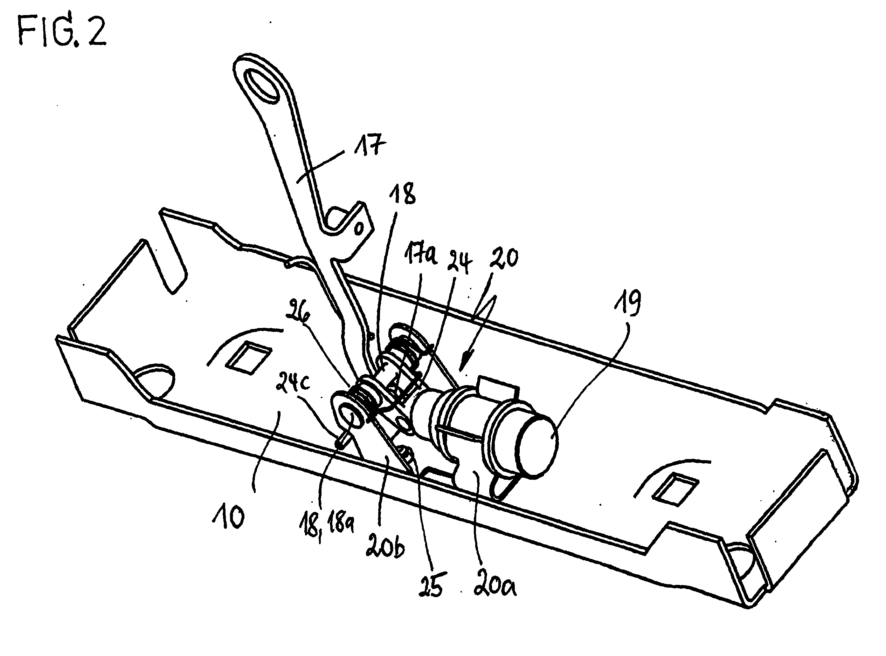

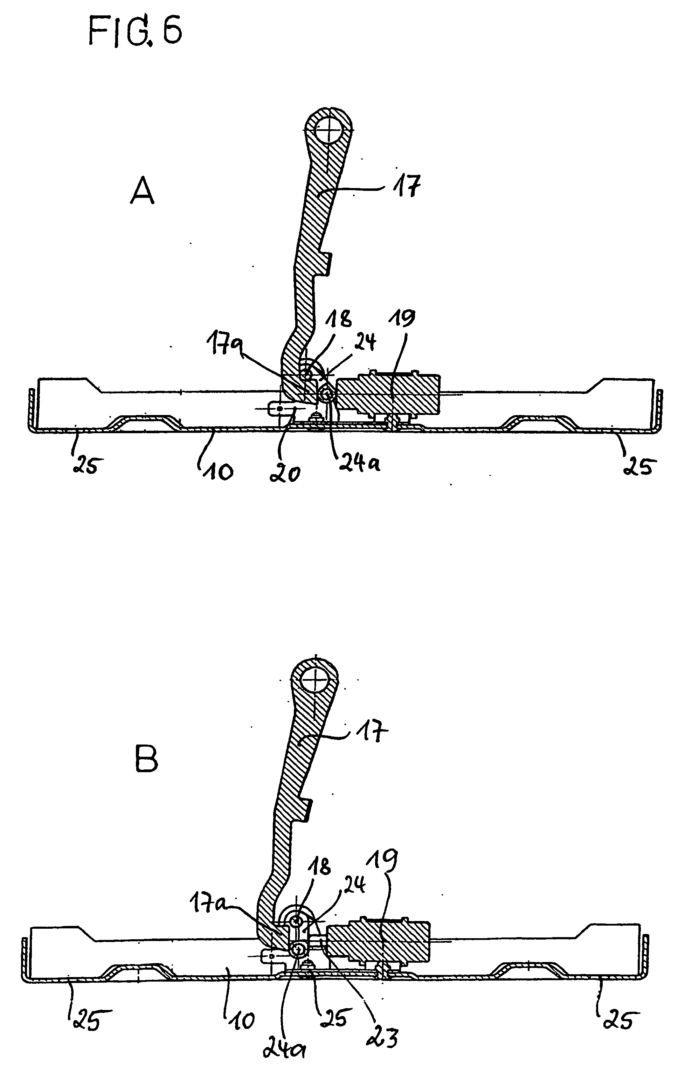

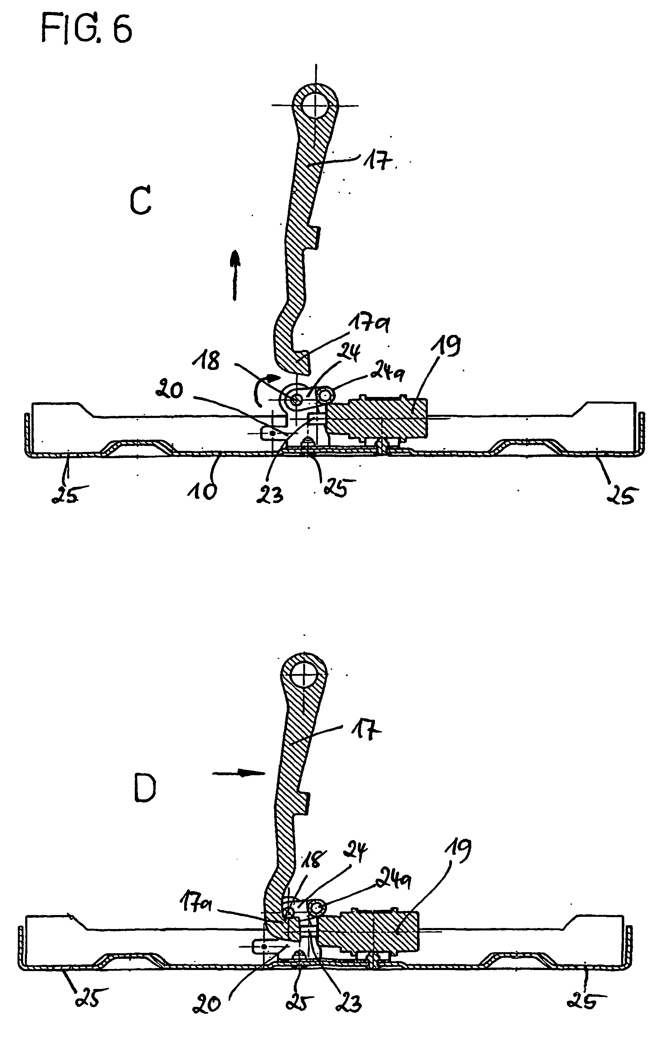

Um den Überrollbügel 1 in seiner dargestellten unteren Position, der Ruhelage, gegen die Kraft der dann vorgespannten Druckfedern 14, 15 halten zu können, ist an der Traverse 5 eine um eine Achse 16 gegen den Uhrzeigersinn federvorgespannte, drehbar gelagerte Halteklinke 17 mit einer hakenförmig abgebogenen Haltenase 17 a (Figuren 2, 6) angebracht, die später noch im einzelnen erläutert werden wird, und die in Wirkeingriff mit einem im Bodenteil 10 verankerten Haltebolzen 18 bringbar ist. Bei abgesenktem Überrollbügel 1, und damit auch bei abgesenkter Traverse 5, liegt die Haltenase 17 a an dem Haltebolzen 18 an und hält den Überrollbügel 1 in der Ruhelage.

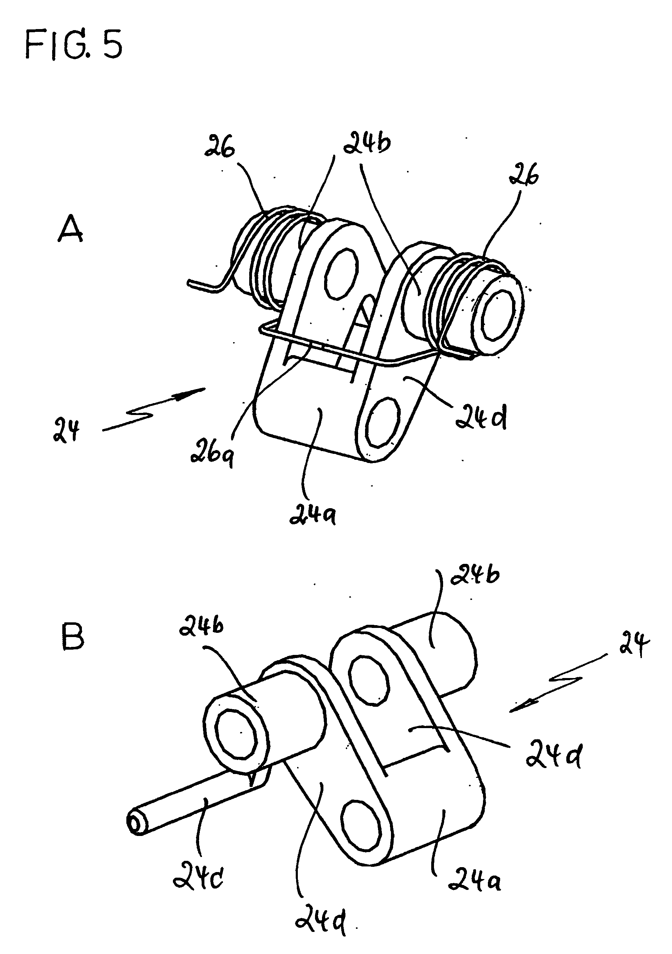

Am Bodenteil 10 ist weiterhin ein sensorgesteuertes Auslösesystem in einer Halterung 20 fest angebracht, das vorzugsweise durch ein einen Stift 23 (Fig. 6) ausstoßendes, pyrotechnisches Auslöseelement 19 gebildet ist, das sicherer als ein üblicher Auslösemagnet die relativ hohe Auflagekraft der Halteklinke 17 an dem Haltebolzen 18 überwinden kann. Dieses pyrotechnische Auslösesystem wird später noch näher erläutert. In der Halterung 20 ist auch der Haltebolzen 18 gelagert, der zugleich eine Welle für eine verschwenkbare Wippe 24 (Fig. 5) darstellt, die einen über Wangen 24 d abgekröpften Verbindungsschenkel 24 a besitzt, wobei dieser Verbindungsschenkel 24 a der Wippe zwischen der Stirnseite des Stiftes 23 und der Stirnseite der Nase 17 a der Halteklinke 17 liegt, d.h. als bewegliches Distanzstück den Raum zwischen Stift 23 und Haltebolzen 18 überbrückt.

An dem Führungsblock 11 ist ein Rastdorn 21 befestigt, der in der oberen Stellung mit einer Verriegelungsklinke, die in der Traverse 5 ebenfalls um die Welle 16 schwenkbar angelenkt ist, verriegelnd in Wirkeingriff bringbar ist, um ein ungewolltes Eindrücken des Überrollbügels in einer ausgefahrenen Position zu verhindern.

In der Traverse 5 ist weiterhin, ebenfalls um die Welle 16 schwenkbar, ein Entriegelungshebel 22 angelenkt, der Steuerfunktionen hat, da er über seitliche Abstellungen sowohl auf die hakenförmige Halteklinke 17 als auch auf die Verriegelungsklinke einwirken kann.

Im Aktivierungsfall stößt der Stift 23 des pyrotechnischen Auslösesystems 19 über den abgekröpften Verbindungsschenkel 24 a der Wippe 24 die Nase 17 a der Halteklinke 17 aus dem Wirkeingriff mit dem Haltebolzen 18 und gibt damit den Überrollbügel 1 frei, der, samt der Traverse 5, angetrieben von den Druckfedern, in seine obere Position fährt. Während dieser Aufstellbewegung ratscht die in der bewegten Traverse 5 gehalterte Verriegelungsklinke über die Verzahnung des an dem Führungsblock 11 fahrzeugfest angebrachten Rastdornes 21 und verriegelt in der oberen Stellung ein Wiedereinfahren.

Nach einer gewollten Auslösung, insbesondere zu Testzwecken bei der Fertigung und bei betrieblichen Inspektionen im Fahrbetrieb, muß der Überrollbügel, hier manuell, wieder selbstätig in die Ruhelage nach Figur 1 reversiert werden können, d.h. die federvorgespannte Halteklinke 17 muß wieder selbstätig am Haltebolzen 18 einrasten können. Dies ist jedoch nicht ohne weitere Maßnahmen möglich, da ohne den beweglichen Verbindungsschenkel 24 der Wippe der ausgestoßene Stift 23 den Raum unterhalb des Haltebolzens 18 blockieren und die Federvorspannung der Halteklinke 17 nicht ausreichen würde, um die hohen Rückstellkräfte für den Stift (ca. 150 N) aus eigener Kraft zu überwinden.

Diese Problematik und ihre erfindungsgemäße Lösung soll nunmehr anhand der folgenden Figuren, die jeweils vergrößerte Ausschnitte aus der Figur 1 zeigen, näher beschrieben werden.

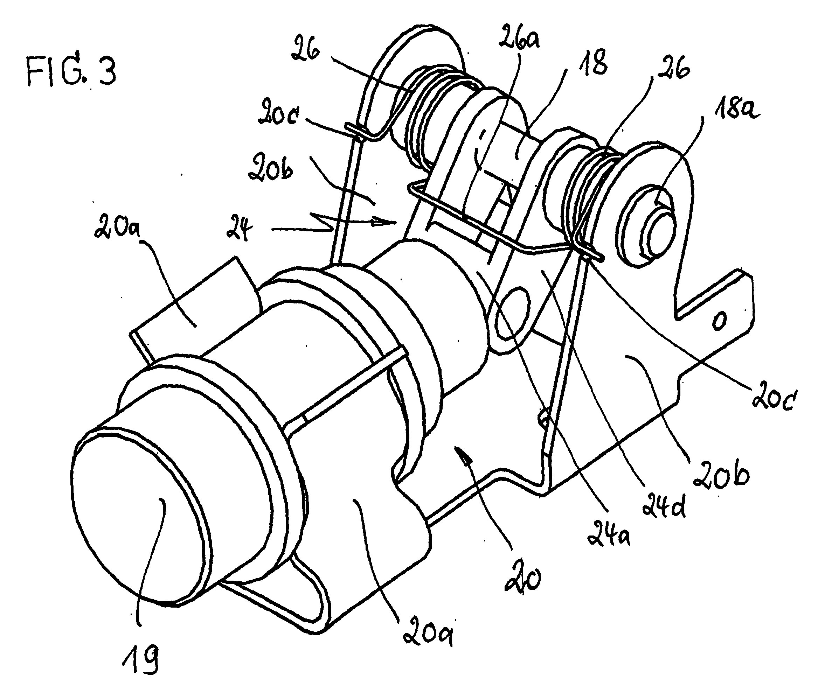

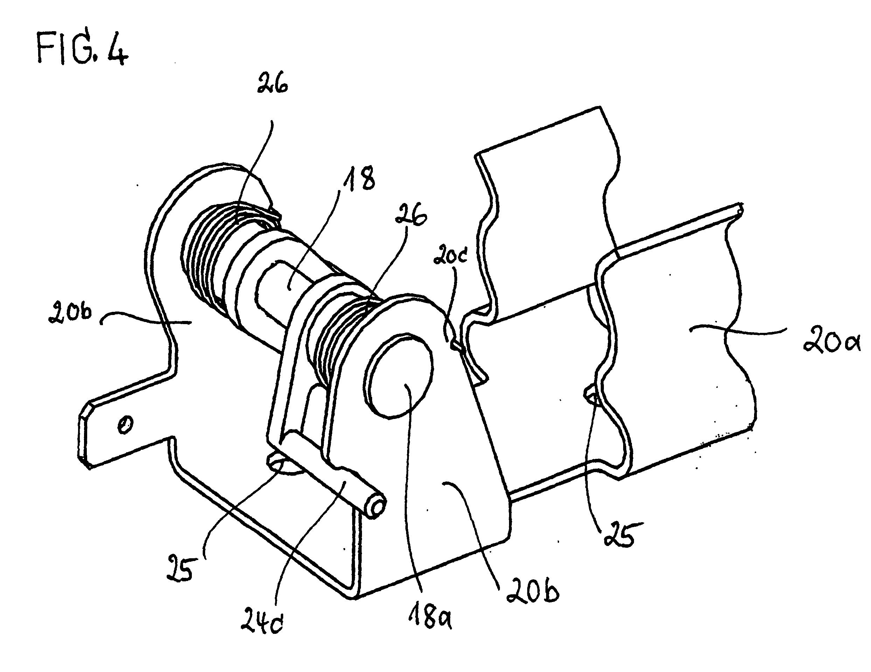

Die Halterung 20 für das pyrotechnische Auslösesystem weist, wie insbesondere auch die Figuren 2 - 4 zeigen, einen Klemmbereich 20 a für das lösbare Haltern des patronenartigen pyrotechnischen Auslöseelements 19 und einen Lagerbereich in Form von Lagerböcken 20 b für den Haltebolzen 18 auf, der mittels Sicherungsscheiben 18 a in den Lagerböcken gesichert gelagert ist. Diese Halterung 20 ist an dem Bodenteil 10 der Kassette fest angebracht, z.B. über Nietverbindungen 25. Auf dem Haltebolzen 18 ist die in der Fig. 5 näher dargestellte Wippe 24 drehbar gelagert, die Lagerbuchsen 24 b und den über Wangen 24 d abgekröpften Verbindungsschenkel 24 a sowie einen seitlichen Betätigungsstift 24 c besitzt. Die Lagerbuchsen 24 b nehmen jeweils Windungen einer Schenkelfeder 26 auf, die einen Verbindungsbügel 26 a besitzt und deren Enden, wie die Fig. 3 zeigt, unter Vorspannen der Schenkelfeder jeweils in einer Hinterschneidung 20 c in den Lagerböcken 20 b fixiert sind. Die Vorspannung ist so gewählt, daß, wenn der Verbindungsschenkel 24 a der Wippe durch die Halte-Klinke nach einer Auslösung freigegeben wird, der Verbindungsschenkel 24 a der Wippe mittels des Feder-Verbindungsbügels 26 a mit einer relativ geringen Kraft nach oben um den Haltebolzen 18 verschwenkt wird, und dabei den Raum unterhalb des Bolzens frei gibt.

Wie die Fig. 6, Figurenteil A, zeigt, überbrückt der Verbindungsschenkel 24 a im Ruhezustand die Distanz zwischen der Stirnfront des Stiftes 23 und der Stirnfront des hakenförmigen Fortsatzes 17 a der Halteklinke 17, d.h. der Verbindungsschenkel (oder Verbindungssteg) 24 a stellt ein Distanzstück dar.

Wird der Treibsatz der Patrone 19 ausgelöst, dann drückt der Stift 23 das Distanzstück 24 a explosionsartig gegen den Fortsatz 17 a der Halteklinke 17 und verschwenkt die Wippe 24 um den Haltebolzen 18 unter Aufhebung des Wirkeingriffes mit dem Haltebolzen, wodurch die Halteklinke 17 freikommt und mit der Traverse 5, d.h. dem Überrollbügel 1 nach oben ausfährt. Der Stift 23 bleibt im ausreichenden Abstand vor dem Haltebolzen stehen, d.h. er blockiert nicht den Raum unterhalb des Haltebolzens 18. Dieser Zustand ist in Fig. 6, Teil B und C dargestellt.

Die Wippe 24 wird dabei durch die Vorspannkraft der Feder 26 um etwa 270° im Uhrzeigersinn verschwenkt, und liegt mit dem Verbindungssteg 24 a, wie der Figurenteil C zeigt, am pyrotechnischen Auslöser 19 an.

Beim manuellen Reversieren des Überrollbügels kann die Halteklinke 17 daher, wie in Fig. 6, Teil D, dargestellt, aufgrund der Federvorspannung selbsttätig mit dem Haltebolzen 18 in eine haltende Wirkverbindung treten. Das System ist dadurch im Ruhezustand, aber nicht aktiviert.

Zur Aktivierung ist es notwendig, eine neue pyrotechnische Patrone 19 einzusetzen und durch manuelle Betätigung des Stiftes 24 c die Wippe 24 in die Ausgangslage (Figurenteil A) gegen Uhrzeigersinn zurück zu verschwenken.

## Patentansprüche

1. Überrollschutzsystem für Kraftfahrzeuge, mit einem Überrollkörper (1), der in einer fahrzeugfesten Führungseinheit (11) geführt aufgenommen ist, und der im Normalzustand gegen die Kraft von mindestens einer vorgespannten Antriebs-Druckfeder durch eine Haltevorrichtung in einer unteren, eingefahrenen Ruhelage haltbar ist und unter Lösen der Haltevorrichtung mit einem einen Stift ausstoßenden pyrotechnischen Auslöseglied (19) durch die Federkraft der Antriebs-Druckfeder in eine obere, dort verriegelbare schützende Stellung bringbar ist, **dadurch gekennzeichnet, daß** die Haltevorrichtung eine mit dem Überrollkörper (1) drehbeweglich verbundene, federvorgespannte Halteklinke (17) und einen fahrzeugfest angebrachten Haltebolzen (18) aufweist, die in der Ruhelage haltend miteinander in Wirkverbindung stehen, und daß zwischen der Stirnfläche des Stiftes (23) des pyrotechnischen Auslösegliedes (19) und der Halteklinke (17) ein federvorgespanntes, um den Haltebolzen (18) verschwenkbares Distanzstück (24 a) angeordnet ist.

2. Überrollschutzsystem nach Anspruch 1, **dadurch gekennzeichnet, daß** das Distanzstück durch einen über Wangen (24 d) abgekröpften Verbindungssteg (24 a) einer Wippe (24) gebildet ist, die zwei Lagerbuchsen (24 b) für die Lagerung der Wippe (24) auf dem Haltebolzen (18) aufweist, wobei die Lagerbuchsen jeweils eine Vorspannfeder (26) tragen, die über einen die Wangen (24 d) umfassenden Verbindungsbügel 26 a miteinander verbunden sind, derart, daß nach einer Auslösung der Verbindungssteg (24 a) aus dem Raum unterhalb des Haltebolzens (18) nach oben um den Haltebolzen (18) verschwenkbar ist.

3. Überrollschutzsystem nach Anspruch 1 oder2, **dadurch gekennzeichnet, daß** eine fahrzeugfest anbringbare Halterung (20) vorgesehen ist, mit einem Halterungsteil (20 a) für das auswechselbare Haltern des als Patrone ausgebildeten pyrotechnischen Auslösegliedes (19) und einem Halterungsteil mit Lagerböcken (20 b) für das fixierte Lagern des Haltebolzens (18).

4. Überrollschutzsystem nach Anspruch 3, **dadurch gekennzeichnet, daß** das Halterungsteil (20 a) für das pyrotechnische Auslöseglied (19) als offener Klemmhalter ausgebildet ist.

5. Überrollschutzsystem nach Anspruch 3 oder 4, **dadurch gekennzeichnet, daß** die Lagerböcke (20 b) Hinterschneidungen (20 c) für das Fixieren der Enden der Vorspannfeder (26) aufweisen.

6. Überrollschutzsystem nach einem der Ansprüche 2 bis 5, **dadurch gekennzeichnet, daß** an der Wippe (24) ein Betätigungsstift (24 c) für ein manuelles Zurückverschwenken der ausgelösten Wippe (24) angebracht ist.

7. Überrollschutzsystem nach einem der Ansprüche 3 bis 6, **dadurch gekennzeichnet, daß** der Haltebolzen (18) unter Verwendung von Sicherungsscheiben (18 a) in den Lagerböcken (20 b) fixiert gelagert ist.

8. Überrollschutzsystem nach einem der Ansprüche 1 bis 7, **dadurch gekennzeichnet, daß** die Halteklinke (17) einen hakenförmig abgewinkelten Fortsatz (17 a) für den haltenden Wirkeingriff mit dem Haltebolzen (18) aufweist.

9. Überrollschutzsystem nach einem der Ansprüche 1 bis 8, mit einem fahrzeugfesten kassettenartigen Gehäuse (7) mit Seitenteilen (8, 9), einem Bodenteil (10) und einer oberen Führungseinheit (11), und einem U-förmigen Überrollbügel (1), der zwei Schenkelrohre (3, 4) besitzt, deren freie Enden über eine Traverse (5) miteinander verbunden sind, **dadurch gekennzeichnet, daß** die federvorgespannte Halteklinke (17) drehbeweglich an der Traverse (5) angelenkt ist, und sowohl der Haltebolzen (18) mit dem um ihn verschwenkbaren Distanzstück (24) als auch das pyrotechnische Auslöseglied (19) auf dem Kassetten-Bodenteil (10) fest angebracht sind.

## Claims

1. Rollover protection system for motor vehicles, with a rollover body (1) which is accommodated in a guided manner in a guide unit (11) which is rigid with the vehicle, which body can be retained in the normal state in a lower, retracted rest position against the force of at least one biased driving compression spring by a retaining device and, upon releasing the retaining device with a pyrotechnic trigger member (19), which expels a pin, can be brought by the spring force of the driving compression spring into an upper protective position, which can be locked here, **characterised in that** the retaining device comprises a spring-biased detent (17), which is rotatably connected to the rollover body (1), and a retaining bolt (18), which is mounted so as to be rigid with the vehicle, the detent and the bolt being actively connected together with a retention effect in the rest position, and that a spring-biased spacer (24 a), which can be pivoted about the retaining bolt (18), is disposed between the end face of the pin (23) of the pyrotechnic trigger member (19) and the detent (17).

2. Rollover protection system according to Claim 1, **characterised in that** the spacer is formed by a connecting bridge (24 a), which is offset via side walls (24 d), of a rocker (24) comprising two bearing bushes (24 b) for supporting the rocker (24) on the retaining bolt (18), wherein the bearing bushes in each base bear a biasing spring (26), which springs are connected together via a connecting bow (26 a), which embraces the side walls (24 d), such that the connecting bridge (24 a) can be pivoted upwards about the retaining bolt (18) out of the space below the retaining bolt (18) following a triggering action.

3. Rollover protection system according to Claim 1 or 2, **characterised in that** a holder (20) is provided, which holder can be mounted so as to be rigid with the vehicle and has a holder part (20 a) for holding the pyrotechnic trigger member (19), which is formed as a cartridge, such that it can be interchanged and a holding part with bearing pedestals (20 b) for supporting the retaining bolt (18) in a fixed manner.

4. Rollover protection system according to Claim 3, **characterised in that** the holding part (20 a) for the pyrotechnic trigger member (19) is formed as an open clamping holder.

5. Rollover protection system according to Claim 3 or 4, **characterised in that** the bearing pedestals (20 b) comprise undercuts (20 c) for fixing the ends of the biasing spring (26).

6. Rollover protection system according to any one of Claims 2 to 5, **characterised in that** an actuating pin (24 c) for manually pivoting back the triggered rocker (24) is mounted on the rocker (24).

7. Rollover protection system according to any one of Claims 3 to 6, **characterised in that** the retaining bolt (18) is supported in a fixed manner in the bearing pedestals (20 b) using securing discs (18a).

8. Rollover protection system according to any one of Claims 1 to 7, **characterised in that** the detent (17) comprises a prolongation (17 a), which is angled in the shape of a hook, for active engagement with the retaining bolt (18) with a retention effect.

9. Rollover protection system according to any one of Claims 1 to 8, with a cassette-type housing (7) which is rigid with the vehicle and has side parts (8, 9), a bottom part (10) and an upper guide unit (11), and a U-shaped rollover bar (1) which has two branch tubes (3, 4), the free ends of which are connected together via a cross member (5), **characterised in that** the spring-biased detent (17) is rotatably articulated to the cross member (5), and both the retaining bolt (18) with the spacer (24), which can be pivoted about the latter, and the pyrotechnic trigger member (19) are rigidly mounted on the cassette bottom part (10).

## Revendications

1. Système de protection en cas de tonneau pour véhicules automobiles, comprenant un corps pour tonneau (1), qui est reçu en étant guidé dans une unité de guidage (11) fixée au véhicule, et qui, à l'état normal, peut être maintenu par un dispositif de maintien dans une position de repos inférieure, rentrée, à l'encontre de la force d'au moins un ressort de pression d'entraînement précontraint, et qui, en desserrant le dispositif de maintien avec un élément de déclenchement pyrotechnique (19) éjectant une goupille, peut être amené dans une position de protection supérieure verrouillable par l'élasticité du ressort de pression d'entraînement, **caractérisé en ce que** le dispositif de maintien comprend un cliquet de maintien (17) à ressort précontraint, relié de façon mobile en rotation au corps pour tonneau (1) et un cliquet de maintien (18) monté fixé au véhicule, qui sont en liaison fonctionnelle l'un avec l'autre lors du maintien dans la position de repos, et **en ce qu'**une entretoise (24a) à ressort précontraint, pouvant pivoter autour du boulon de maintien (18), est disposée entre la surface frontale de la goupille (23) de l'élément de déclenchement pyrotechnique (19) et le cliquet de maintien (17).

2. Système de protection en cas de tonneau selon la revendication 1, **caractérisé en ce que** l'entretoise est formée par un étai de raccordement (24a) d'une bascule (24) recourbé au-dessus de joues (24d), laquelle bascule comprend deux coussinets (24b) pour le logement de la bascule (24) sur le boulon de maintien (18), les coussinets portant respectivement un ressort de précontrainte (26), qui sont reliés l'un à l'autre par un étrier de raccordement (26a) entourant les joues (24d), de telle sorte qu'après un déclenchement, l'étai de raccordement (24a) peut pivoter vers le haut autour du boulon de maintien (18) à partir de l'espace situé au-dessous du boulon de maintien (18).

3. Système de protection en cas de tonneau selon la revendication 1 ou 2, **caractérisé en ce qu'**il est prévu une fixation (20) pouvant être montée fixée au véhicule, comprenant une partie de fixation (20a) pour le maintien interchangeable de l'élément de déclenchement pyrotechnique (19) conçu sous forme de cartouche et une partie de fixation comprenant des supports de palier (20b) pour le logement fixé du boulon de maintien (18).

4. Système de protection en cas de tonneau selon la revendication 3, **caractérisé en ce que** la partie de fixation (20a) pour l'élément de déclenchement pyrotechnique (19) est conçue sous forme de support de serrage ouvert.

5. Système de protection en cas de tonneau selon la revendication 3 ou 4, **caractérisé en ce que** les supports de palier (20b) comprennent des contre-dépouilles (20c) pour la fixation des extrémités du ressort de précontrainte (26).

6. Système de protection en cas de tonneau selon l'une quelconque des revendications 2 à 5, **caractérisé en ce qu'**une goupille d'actionnement (24c) pour un pivotement de retour manuel de la bascule (24) déclenchée est disposée sur la bascule (24).

7. Système de protection en cas de tonneau selon l'une quelconque des revendications 3 à 6, **caractérisé en ce que** le boulon de maintien (18) est logé en étant fixé dans les supports de palier (20b) en utilisant des rondelles d'arrêt (18a).

8. Système de protection en cas de tonneau selon l'une quelconque des revendications 1 à 7, **caractérisé en ce que** le cliquet de maintien (17) comprend un prolongement (17a) coudé en forme de crochet pour la mise en prise fonctionnelle de maintien avec le boulon de maintien (18).

9. Système de protection en cas de tonneau selon l'une quelconque des revendications 1 à 8, comprenant un logement (7) du type caisson fixé au véhicule, avec des parties latérales (8, 9), une partie inférieure (10) et une unité de guidage supérieure (11), et un arceau de sécurité (1) en forme de U, qui possède deux tubes formant branche (3, 4), dont les extrémités libres sont reliées l'une à l'autre par une traverse (5), **caractérisé en ce que** le cliquet de maintien (17), à ressort précontraint, est articulé de façon mobile en rotation sur la traverse (5), et le boulon de maintien (18) comprenant l'entretoise (24) pouvant pivoter autour de celui-ci ainsi que l'élément de déclenchement pyrotechnique (19) sont montés fixés à la partie inférieure (10) du caisson.
